# EUROPÄISCHE PATENTSCHRIFT

(11) **EP 1 760 284 B1**
(45) Veröffentlichungstag und Bekanntmachung des Hinweises auf die Patenterteilung: **16.12.2009**
(21) Anmeldenummer: 06018310.0
(22) Anmeldetag: 01.09.2006
(51) Int. Cl.: F01N 3/20, F01N 3/28, B01D 53/94

(54) **Verfahren und Vorrichtung zur Zugabe eines Reaktanten zu einem Abgas einer Verbrennungskraftmaschine**
Method and device for adding reactants to an exhaust gas of an internal combustion engine
Procédé et dispositif pour fournir des réactifs à un gaz d'échappement d'un moteur à combustion interne

(30) Priorität: 02.09.2005 DE 102005041841
(43) Veröffentlichungstag der Anmeldung: 07.03.2007
(73) Patentinhaber: Emitec Gesellschaft für Emissionstechnologie mbH, 53797 Lohmar (DE)
(72) Erfinder: Klein, Ulf, 53819 Neunkirchen-Seelscheid (DE)
(74) Vertreter: Rössler, Matthias

(56) Entgegenhaltungen:
- EP-A- 1 022 048
- DE-A1- 19 913 462
- JP-A- 11 166 410
- JP-A- 56 085 516

## Beschreibung

Gegenstand der vorliegenden Erfindung ist ein Verfahren und eine Vorrichtung zur Zugabe eines Reaktanten zu einem Abgas einer Verbrennungskraftmaschine. Insbesondere ist das erfindungsgemäße Verfahren und die erfindungsgemäße Vorrichtung zur Zugabe eines Reduktionsmittels und/oder eines Reduktionsmittelvorläufers wie beispielsweise Harnstoff zum Abgassystem einer Verbrennungskraftmaschine geeignet. Bevorzugt wird das erfindungsgemäße Verfahren bzw. die erfindungsgemäße Vorrichtung in Abgassystemen von Automobilen eingesetzt.

Weltweit sind in vielen Staaten gesetzliche Regelungen getroffen worden, die einen oberen Grenzwert für den Gehalt von bestimmten unerwünschten Substanzen im Abgas von Verbrennungskraftmaschinen festlegen. Hierbei handelt es sich zumeist um Substanzen, deren Abgabe an die Umwelt unerwünscht ist. Ein Beispiel für solche Substanzen sind Stickoxide (NOₓ). Der Anteil von Stickoxiden im Abgas muss in vielen Ländern gesetzlich festgelegte Grenzwerte unterschreiten. Aufgrund der relativ niedrigen gesetzlich festgelegten Grenzwerte eignen sich innermotorische Maßnahmen zur Reduktion der Stickoxidemissionen nur bedingt zur Einhaltung der Grenzwerte, oftmals ist eine Abgasnachbehandlung in Bezug auf Stickoxide erforderlich. Hierbei hat sich herausgestellt, dass eine selektive katalytische Reduktion (SCR, selective catalytic reduction) der Stickoxide vorteilhaft ist. Diese sogenannte SCR-Methode benötigt ein Reduktionsmittel, welches stickstoffhaltig ist. Insbesondere hat sich der Einsatz von Ammoniak (NH₃) als Reduktionsmittel als eine mögliche Alternative herausgestellt. Aufgrund der chemischen Eigenschaften und der gesetzlichen Bestimmungen in vielen Staaten wird üblicherweise Ammoniak nicht als reines Ammoniak vorgehalten, da dies insbesondere bei mobilen Anwendungen zu Problemen führen kann. Vielmehr werden statt einer Bevorratung der Reduktionsmittel selber oftmals Reduktionsmittelvorläufer gespeichert und in mobilen Anwendungen mitgeführt.

Unter einem Reduktionsmittelvorläufer wird hier insbesondere ein Stoff verstanden, welcher das Reduktionsmittel abspaltet und/oder chemisch in das Reduktionsmittel umgewandelt werden kann. Beispielsweise stellt für das Reduktionsmittel Ammoniak Harnstoff einen Reduktionsmittelvorläufer dar. Weitere mögliche Reduktionsmittelvorläufer für Ammoniak als Reduktionsmittel sind beispielsweise Ammoniumcarbamat, Isocyansäure und Cyanursäure.

Sämtliche Reduktionsmittel bzw. Reduktionsmittelvorläufer können in unerwünschte Reaktionsprodukte umgewandelt werden oder in diese zerfallen. Ob und wenn ja in welchem Maße eine Umsetzung oder ein Zerfall in nicht gewünschte Nebenprodukte erfolgt, hängt von den jeweiligen Bedingungen im Abgassystem ab. Insbesondere ist hier die Temperatur, der die Reaktanten ausgesetzt sind, ein wichtiger Faktor. Wird nun ein Reduktionsmittel und/oder ein Reduktionsmittelvorläufer zum Abgas einer Verbrennungskraftmaschine hinzugegeben, so kann es in kälteren Bereichen des Abgassystems dazu kommen, dass eine Verschiebung des Reaktionsgleichgewichts hin zu unerwünschten Nebenprodukten erfolgt. Insbesondere kann es dann, wenn Harnstoff als Reduktionsmittelvorläufer für das Reduktionsmittel Ammoniak beispielsweise in wässriger Lösung zugegeben wird, zur Umsetzung des Harnstoffs (NH₂-CO-NH₂) unter anderem zu Biuret (NH₂-CO-NH-CO-NH₂) unter Abspaltung von Ammoniak (NH₃) kommen. Biuret und weitere unerwünschte Nebenprodukte stellen eine plastische Masse dar, die zu einem Verkleben der entsprechenden Bereiche des Abgassystems führen kann. Insbesondere kann es dann, wenn die Wandung des Abgassystems relativ kühl ist zur Umsetzung zu Biuret und zum Niederschlag auf den Wandungen des Abgassystems kommen.

Aus der DE-A1-199 13 462 sind ein Verfahren und eine Vorrichtung zur thermischen Hydrolyse und Dosierung von Harnstoff in einem Reaktor mittels des Abgases einer Brennkraftmaschine bekannt, wobei ein Teilstrom des Abgases entnommen und durch den Reaktor geleitet wird. Dabei kann der Reaktor direkt in der Abgasleitung eingebunden sein.

Aus der EP-A1-1 022 048 sind ein Verfahren und eine Vorrichtung zur Dosierung eines Reduktionsmittels ins Abgas einer Brennkraftmaschine bekannt, bei der zur gleichmäßigen Verteilung des Reduktionsmittels über den Querschnitt der Abgasleitung Leitvorrichtungen vorgesehen sind, so dass die Abgasströmung samt Reduktionsmittel in rotierende Bewegung versetzt wird.

Von daher liegt der vorliegenden Erfindung die Aufgabe zugrunde, ein Verfahren und eine Vorrichtung zur Zugabe eines Reaktanten anzugeben, bei der die Bildung von unerwünschten Nebenprodukten an der Wand des Abgassystems verringert wird.

Diese Aufgabe wird gelöst durch ein Verfahren und eine Vorrichtung mit den Merkmalen der jeweiligen unabhängigen Ansprüche. Vorteilhafte Weiterbildungen der erfindungsgemäßen Vorrichtung und des erfindungsgemäßen Verfahrens sind Gegenstand der jeweiligen abhängigen Ansprüche.

Bei dem erfindungsgemäßen Verfahren zur Zugabe eines Reaktanten zu einem Abgas einer Verbrennungskraftmaschine wird ein Abgasstrom in eine innere Abgasströmung und eine die innere Abgasströmung radial umgebende äußere Abgasströmung aufgeteilt. Der äußeren Abgasströmung wird ein Drall aufgeprägt und dann der Reaktant der inneren Abgasströmung zugegeben.

Unter einem Drall oder einer Drallströmung wird hier insbesondere eine Strömung verstanden, die neben einer globalen translatorischen auch eine globale rotatorische Geschwindigkeitskomponente aufweist. Bei dem erfindungsgemäßen Verfahren führt die Bildung einer Drallströmung in der äußeren Abgasströmung dazu, dass ein Kontakt des Reaktanten mit einer die Abgasströmung radial begrenzenden Bewandung unwahrscheinlicher wird oder sogar im wesentlichen unterbunden wird, da die Drallströmung eine Art Isolierung für die innere Abgasströmung bildet. Hierdurch wird eine Vermischung der inneren Abgasströmung mit der äußeren Abgasströmung im wesentlichen verhindert oder ist jedenfalls so gering, dass die den Reaktanten tragende innere Abgasströmung nicht im wesentlichen Umfang mit der Wand des Abgassystems in Kontakt kommen kann.

Gemäß einer vorteilhaften Weiterbildung des erfindungsgemäßen Verfahrens wird die innere Abgasströmung laminarisiert.

Unter einer Laminarisierung einer Strömung wird insbesondere eine Reduktion der Reynoldszahl der Strömung verstanden. Insbesondere kann in vorteilhafter Weise eine Reduktion der Reynoldszahl unter eine kritische Reynoldszahl erfolgen, oberhalb derer die innere Abgasströmung turbulent und/oder quasi-laminar ausgebildet ist.

Gemäß einer weiteren vorteilhaften Ausgestaltung des erfindungsgemäßen Verfahrens wird der aufgeprägte Drall in Abhängigkeit von mindestens einer der folgenden Größen:
a) der Abgastemperatur,
b) dem Abgasdruck
c) dem Abgasmassenstrom und
d) der Menge an Reaktant
in Bezug auf mindestens eine der folgenden Größen angepasst:
3.1) eine rotatorische Geschwindigkeitskomponente der äußeren Abgasströmung und
3.2) eine translatorische Geschwindigkeitskomponente der äußeren Abgasströmung.

Das heißt insbesondere, dass die Rotationsgeschwindigkeit der Drallströmung bzw. der äußeren Abgasströmung gemäß 3.1) verändert, insbesondere erzeugt und/oder erhöht wird und/oder gemäß 3.2) die mittlere translatorische Strömungsgeschwindigkeit der äußeren Abgasströmung bzw. der Drallströmung verändert wird. So ist es beispielsweise möglich, mit steigender Abgastemperatur und/oder steigendem Abgasdruck die rotatorische Geschwindigkeitskomponente des Dralls bzw. der äußeren Abgasströmung zu erhöhen, um so eine deutlich bessere Isolierung der inneren Abgasströmung gegenüber einer außenliegenden Wandung zu erreichen. Unter der Größe d) wird bevorzugt die Menge an Reaktant verstanden, die von der Drallströmung von der Wand abgehalten werden soll.

Gemäß einer weiteren vorteilhaften Ausgestaltung des erfindungsgemäßen Verfahrens umfasst der Reaktant mindestens einen der folgenden Stoffe:
4.1) ein Reduktionsmittel,
4.2) einen Reduktionsmittelvorläufer und
4.3) ein Oxidationsmittel

Insbesondere handelt es sich hierbei um Reduktionsmittel bzw. Reduktionsmittelvorläufer, die im Rahmen einer selektiven katalytischen Reduktion von Stickoxiden eingesetzt werden. Bevorzugt ist somit ein Verfahren zur selektiven katalytischen Reduktion möglich, bei dem ein Reaktant zu einem Abgas einer Verbrennungskraftmaschine zugegeben wird, wobei ein Abgasstrom in eine innere Abgasströmung und eine die innere Abgasströmung radial umgebende äußere Abgasströmung aufgeteilt wird, wobei der äußeren Abgasströmung ein Drall aufgeprägt wird und dann der Reaktant der inneren Abgasströmung zugegeben wird, wobei der Reaktant mindestens einen der folgenden Stoffe umfasst:
4.1) ein Reduktionsmittel und
4.2) einen Reduktionsmittelvorläufer.

Bevorzugt können hier stickstoffhaltige Reduktionsmittel und/oder deren Vorläufer zugegeben werden, besonders bevorzugt Harnstoff, insbesondere in wässriger Lösung.

Ein Oxidationsmittel kann beispielsweise Kohlenwasserstoffe, die insbesondere auch aus dem Kraftstoff der Verbrennungskraftmaschine stammen können, umfassen. Insbesondere kann das Oxidationsmittel zur Regeneration eines Speicherelementes, insbesondere eines Speicherelementes für Stickoxide (NOₓ) eingesetzt werden.

Gemäß einer weiteren vorteilhaften Ausgestaltung des erfindungsgemäßen Verfahrens umfasst der Reaktant mindestens einen der folgenden Stoffe:
5.1) Ammoniak (NH₃),
5.2) Harnstoff,
5.3) Ammoniumformiat,
5.4) Ammoniumcarbamat,
5.5) Isocyansäure,
5.6) Cyanursäure und
5.7) Kohlenwasserstoffe.

Ammoniumformiat 5.3) stellt das entsprechende Salz der Ameisensäure dar. Ammoniumformiat kann in vorteilhafter Weise insbesondere bei wässrigen Harnstofflösungen zur Reduktion des Gefrierpunktes dieser Lösung eingesetzt werden. Eine entsprechende Harnstofflösung, die Ammoniumformiat enthält, ist unter dem Markennamen "Denoxium" erhältlich. Die Stoffe 5.2), 5.4), 5.5) und 5.6) stellen Reduktionsmittelvorläufer für das Reduktionsmittel Ammoniak 5.1) dar. Bevorzugt ist hierbei der Einsatz von Harnstoff, da gerade für wässrige Harnstofflösungen ein logistisches Netzwerk für die Betankung von mobilen Anwendern mit einer solchen Lösung in einigen Staaten bereits aufgebaut worden ist. Kohlenwasserstoffe 5.7) können insbesondere auch zur Regeneration von Speicherelementen wie beispielsweise Speicherelementen für Stickoxide (NOₓ) eingesetzt werden.

Gemäß einem weiteren Aspekt der vorliegenden Erfindung wird eine Vorrichtung zur Zugabe eines Reaktanten zu einem Abgas einer Verbrennungskraftmaschine vorgeschlagen, wobei das Abgas in einer Strömungsrichtung strömt und Mittel zum Aufprägen eines Dralls auf eine äußere Abgasströmung, die eine innere Abgasströmung radial umgibt, ausgebildet sind, wobei in Strömungsrichtung hinter den Mitteln zum Aufprägen eines Dralls Zugabemitteln zur Zugabe des Reaktanten in die innere Abgasströmung ausgebildet sind.

Die erfindungsgemäße Vorrichtung nutzt in vorteilhafter Weise die Tatsache, dass die Drallströmung in der äußeren Abgasströmung als eine Art Isolierung für die innere Abgasströmung genutzt werden kann, so dass ein Kontakt des Reaktanten mit einem die Vorrichtung nach außen radial begrenzenden Rohr oder Mantelrohr möglichst vermieden wird. Beim Auftreffen des Reaktanten auf die im Regelfall deutlich kühlere Wand kann es zur Bildung von unerwünschten Nebenprodukten kommen. Die Bildung dieser Nebenprodukte wird somit wirkungsvoll vermieden.

Das Mantelrohr kann in vorteilhafter Weise zumindest in Teilbereichen beheizbar sein, beispielsweise durch eine elektrische Widerstandsheizung. Auch eine Beheizung des Abgasstroms beispielsweise durch einen elektrisch beheizbaren Wabenkörper ist alternativ und/oder zusätzlich möglich.

Gemäß einer weiteren vorteilhaften Ausgestaltung der erfindungsgemäßen Vorrichtung umfassen die Mittel zum Aufprägen eines Dralls mindestens eine Leitschaufel.

Insbesondere kann es sich hierbei um eine Leitschaufel aus einem hochtemperaturkorrosionsfesten Material, insbesondere aus Edelstahl handeln. Grundsätzlich ist die Ausbildung der Mittel zum Aufprägen eines Dralls aus hochtemperaturkorrosionsfestem Material, welches den Bedingungen in Abgassystemen von Verbrennungskraftmaschinen widerstehen kann, bevorzugt.

Gemäß einer weiteren vorteilhaften Ausgestaltung der erfindungsgemäßen Vorrichtung ist die mindestens eine Leitschaufel elastisch.

Die Ausbildung einer elastischen Leitschaufel ermöglicht eine der Auslenkung und/oder der Krümmung der Leitschaufel in Abhängigkeit von Abgasparametern wie beispielsweise dem Abgasmassenstrom und/oder dem Abgasdruck. Je größer der Abgasdruck ist, desto stärker wird die Leitschaufel verformt. Bevorzugt ist die Leitschaufel so ausgebildet, dass auch bei maximalen Abgasdrücken und/oder - temperaturen die Verformung der Leitschaufel im elastischen Bereich bleibt. Bevorzugt kann die Leitschaufel aus korrosionsfestem Material insbesondere aus einem entsprechend gestalteten Edelstahl ausgebildet sein.

Gemäß einer weiteren vorteilhaften Ausgestaltung der erfindungsgemäßen Vorrichtung ist die mindestens eine Leitschaufel so ausgebildet, dass mindestens eine der folgenden Größen
a) eine Auslenkung der Leitschaufel und
b) eine Krümmung der Leitschaufel
in Abhängigkeit einer Änderung mindestens einer der folgenden Größen veränderbar ist:
9.1) der Abggastemperatur,
9.2) dem Abgasmassenstrom und
9.3) dem Abgasdruck.

Eine solche Ausbildung der Leitschaufel ermöglicht in vorteilhafter Weise die Anpassung der Drallströmung an die Bedingungen in der äußeren Abgasströmung. So kann die Drallströmung an die Situation im Abgassystem angepasst werden.

Gemäß einer weiteren bevorzugten Ausgestaltung der erfindungsgemäßen Vorrichtung ist die mindestens eine Leitschaufel zumindest teilweise aus einem Bimetall ausgebildet.

Unter einem Bimetall wird hier insbesondere ein Verbundwerkstoff aus zwei metallischen Werkstoffen verstanden, die sich in Bezug auf ihre thermische Ausdehnung und insbesondere ihren thermischen Ausdehnungskoeffizienten unterscheiden. Dieser Unterschied im thermischen Ausdehnungskoeffizienten führt dazu, dass bei Erhitzen der Leitschaufel aus Bimetall sich diese verformt, insbesondere verbiegt.

Insbesondere eine Änderung der Krümmung der Leitschaufel in Abhängigkeit von der Abgastemperatur 9.1) kann so in vorteilhafter Weise erreicht werden.

Gemäß einer weiteren vorteilhaften Ausgestaltung der erfindungsgemäßen Vorrichtung umfassen die Mittel zum Aufprägen eines Dralls mindestens einen gewundenen Kanal.

Bevorzugt ist hierbei die Ausbildung eines Schraubenkanals in dem Bereich, in dem die äußere Abgasströmung erzeugt und/oder geführt wird. Besonders bevorzugt ist hierbei, dass der mindestens eine gewundene Kanal von mindestens einer Wand begrenzt ist, die zumindest in Teilbereichen elastisch verformbar ist.

Aufgrund einer solchen elastischen Verformbarkeit der Wand kann eine Anpassung der Drallströmung an die Situation im Abgas, insbesondere an den Abgasdruck erfolgen.

Gemäß einer weiteren bevorzugten Ausgestaltung der erfindungsgemäßen Vorrichtung ist die mindestens eine Wand so ausgebildet, dass ihre Krümmung in Abhängigkeit einer Änderung mindestens einer der folgenden Größen änderbar ist:
13.1) der Abgastemperatur,
13.2) dem Abgasmassenstrom und
13.3) dem Abgasdruck.

Durch eine Änderung der Krümmung der Wand des gewundenen Kanals kann insbesondere eine Änderung der rotatorischen Geschwindigkeitskomponente des Dralls erreicht werden. Die Wand kann aus einem Bimetall ausgebildet sein, so dass eine Anpassung der Krümmung der Wand an die Abgastemperatur 13.1) in einfacher Weise erfolgt.

Gemäß einer weiteren vorteilhaften Ausgestaltung der erfindungsgemäßen Vorrichtung ist die Wand zumindest in Teilbereichen aus einem Bimetall ausgebildet.

Erfindungsgemäß sind stromaufwärts der Zugabemittel Laminarisierungsmittel zum Laminarisieren der inneren Abgasströmung ausgebildet.

Unter einem Laminarisieren wird insbesondere eine Verringerung der Reynoldszahl der inneren Abgasströmung verstanden. Das Laminarisierungsmittel kann insbesondere einen Wabenkörper umfassen, welcher Kanäle aufweist. Ein solcher Wabenkörper kann entweder als keramischer Wabenkörper ausgebildet sein oder auch als metallischer Wabenkörper aus mindestens zumindest teilweise strukturierten und gegebenenfalls mindestens einer im wesentlichen glatten metallischen Lage. Die Laminarisierung ist umso effektiver, je glatter die Kanalwänden sind. Von daher ist insbesondere ein Wabenkörper als Laminarisierungsmittel bevorzugt, welcher keine Durchbrechung oder Leitschaufeln in den Kanalwänden und insbesondere auch keine Beschichtung der Wände der Kanäle aufweist.

Diese vorteilhafte Ausgestaltung nutzt die Begebenheit, dass laminare Strömungen aus einem Wabenkörper nach Verlassen des Wabenkörpers über einen recht langen Strömungsweg ihre laminare Eigenschaft behalten. So wird durch Zugeben des Reaktanten in die innere Abgasströmung erreicht, dass der Reaktant nicht in die Drallströmung und damit auch nicht an ein die Vorrichtung nach außen begrenzendes Rohr bzw. eine entsprechende Wand gelangt.

Bevorzugt kann die erfindungsgemäße Vorrichtung so ausgebildet sein, dass die Mittel zum Aufprägen eines Dralls auf die äußere Abgasströmung radial außerhalb der Laminarisierungsmittel zum Laminarisieren der inneren Abgasströmung ausgebildet sind.

Gemäß einer vorteilhaften Ausgestaltung der erfindungsgemäßen Vorrichtung umfassen die Laminarisierungsmittel einen Wabenkörper mit für ein Fluid in Strömungsrichtung durchströmbaren Kanäle.

Gemäß einer weiteren vorteilhaften Ausgestaltung sind diese Kanäle barrierefrei.

Unter barrierefrei wird insbesondere verstanden, dass die Wände der Kanäle keine Mikrostrukturen, Durchbrechungen und/oder Leitschaufeln und insbesondere auch keine Beschichtung aufweisen.

Gemäß einer weiteren vorteilhaften Ausgestaltung der erfindungsgemäßen Vorrichtung sind die Mittel zum Aufprägen eines Dralls radial außerhalb des Wabenkörpers ausgebildet.

So ist ein kompakter Aufbau der erfindungsgemäßen Vorrichtung möglich.

Gemäß einer weiteren vorteilhaften Ausgestaltung der erfindungsgemäßen Vorrichtung ist radial außerhalb der Mittel zum Aufprägen eines Dralls mindestens ein erstes Mantelrohr ausgebildet.

Das erste Mantelrohr dient somit als äußeres Gehäuse der erfindungsgemäßen Vorrichtung.

Gemäß einer weiteren vorteilhaften Ausgestaltung der erfindungsgemäßen Vorrichtung sind außerhalb der Mittel zum Aufprägen eines Dralls ein äußeres erstes Mantelrohr und ein inneres erstes Mantelrohr ausgebildet, die durch einen Spalt getrennt sind.

Die Ausbildung eines äußeren ersten Mantelrohres und eines inneren ersten Mantelrohres außerhalb der Mittel zum Aufprägen eines Dralls bewirkt, dass das innere erste Mantelrohr durch den Spalt thermisch isoliert vom äußeren ersten Mantelrohr ist. Dadurch kann sich das innere erste Mantelrohr schneller aufheizen, so dass hierdurch die Bildung von unerwünschten Nebenprodukten verringert wird. Der Spalt wirkt hier als eine Art Luftspaltisolierung.

Gemäß einer weiteren vorteilhaften Ausgestaltung der erfindungsgemäßen Vorrichtung ist das mindestens eine erste Mantelrohr im Inneren zumindest in Teilbereichen mit einer katalytisch aktiven Beschichtung versehen, die geeignet ist, den Reaktanten umzusetzen.

Im Inneren bedeutet hier insbesondere, dass die Beschichtung auf der Seite des Mantelrohres, die den Mitteln zum Aufprägen eines Dralls zugewandt ist, ausgebildet ist. Insbesondere handelt es sich bei der Umsetzung um eine Thermo-, Pyro- und/oder Hydrolyse, insbesondere dann, wenn als Reaktant ein Reduktionsmittelvorläufer zugegeben wird.

Gemäß einer weiteren vorteilhaften Ausgestaltung der erfindungsgemäßen Vorrichtung ist zwischen den Mitteln zum Aufprägen eines Dralls und dem Wabenkörper ein zweites Mantelrohr ausgebildet, welches mit Mitteln zum Verschieben der Resonanzfrequenz des zweiten Mantelrohres ausgebildet ist.

Oftmals ist das Ausbilden eines zweiten Mantelrohres um den Wabenkörper, welcher insbesondere als Laminarisierungsmittel dient, vorteilhaft, um dem Wabenkörper die notwendige Stabilität zu geben. Jedoch kann es dann, wenn die Masse des Mantelrohres bzw. des Mantelrohres mit Wabenkörper deutlich größer ist als die Masse der Mittel zum Aufprägen eines Dralls, dazu kommen, dass die Resonanzfrequenz des Mantelrohres bzw. des Mantelrohres mit Wabenkörper in einem kritischen Bereich liegt, welcher bei üblichen Frequenzen im Abgassystem einer Verbrennungskraftmaschine erreicht wird, so dass durch ein Resonanzphänomen die erfindungsgemäße Vorrichtung Schaden nehmen könnte. Deshalb ist es vorteilhaft, Mittel zum Verschieben der Resonanzfrequenz auszubilden. Diese können insbesondere Stützmittel umfassen, die das zweite Mantelrohr an dem mindestens einen ersten Mantelrohr abstützen. Durch das Abstützen des zweiten Mantelrohres am ersten Mantelrohr kommt es zu einer deutlichen Verschiebung der Resonanzfrequenz, so dass eine Resonanzkatastrophe wirksam verhindert werden kann.

Besonders bevorzugt ist es hierbei, dass die Stützmittel zumindest teilweise die Mittel zum Aufprägen eines Dralls bilden. So kann in vorteilhafter Weise als Stützmittel eine entsprechend mit dem zweiten Mantelrohr verbundene Leitschaufel oder eine Wandung eines Schraubkanals gebildet sein.

Die für das erfindungsgemäße Verfahren offenbarten Details und Vorteile lassen sich in gleicher Weise auf die erfindungsgemäße Vorrichtung übertragen und anwenden. Die für die erfindungsgemäße Vorrichtung offenbarten Details und Vorteile lassen sich in gleicher Weise auf das erfindungsgemäße Verfahren übertragen und anwenden. Die erfindungsgemäße Vorrichtung eignet sich insbesondere zur Durchführung des erfindungsgemäßen Verfahrens.

Weitere Vorteile und Details der vorliegenden Erfindung werden nun anhand der beigefügten Figuren näher erläutert, ohne dass die Erfindung auf die dort gezeigten Ausführungsbeispiele und Details beschränkt wäre. Es zeigen:
- Fig. 1: schematisch ein erstes Ausführungsbeispiel einer erfindungsgemäßen Vorrichtung im Längsschnitt;
- Fig. 2: ein Teil des ersten Ausführungsbeispiels einer erfindungsgemäßen Vorrichtung im Längsschnitt;
- Fig. 3: ein zweites Ausführungsbeispiel einer erfindungsgemäßen Vorrichtung im Querschnitt; und
- Fig. 4: einen Ausschnitt eines Querschnitts eines dritten Ausführungsbeispiels einer erfindungsgemäßen Vorrichtung im Querschnitt.

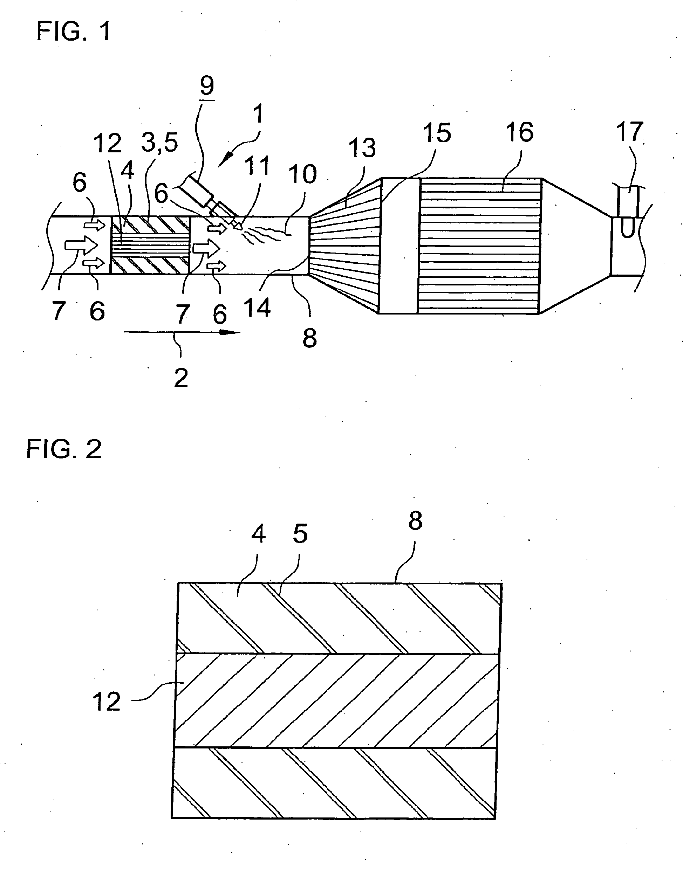

Fig. 1 zeigt schematisch eine erfindungsgemäße Vorrichtung 1 zur Zugabe eines Reaktanten zu einem Abgas einer Verbrennungskraftmaschine. Das Abgas der nicht gezeigten Verbrennungskraftmaschine durchströmt die Vorrichtung 1 in einer Strömungsrichtung 2. Die Vorrichtung 1 umfasst Mittel 3 zum Aufprägen eines Dralls. Im ersten Ausführungsbeispiel der vorliegenden Erfindung sind diese Mittel 3 zum Aufprägen eines Dralls in Form eines gewundenen Kanals 4 ausgebildet, welcher von einer entsprechend gewundenen Wand 5 begrenzt ist. Der gewundene Kanal 4 hat im vorliegenden Ausführungsbeispiel eine schneckenartige Form. Die Mittel 3 zum Aufprägen eines Dralls prägen einen Drall auf eine äußere Abgasströmung 6 auf. Diese umgibt eine innere Abgasströmung 7. Durch den der äußeren Abgasströmung 6 aufgeprägten Drall bildet sich eine äußere Abgasströmung 6 mit einer Drallströmung, die die innere Abgasströmung 7 radial umgibt und die innere Abgasströmung 7 vor dem in Kontakt treten mit einer Wand eines Mantelrohres 8 schützt. In Strömungsrichtung 2 hinter den Mitteln 3 zum Aufprägen eines Dralls sind Zugabemittel 9 zur Zugabe des Reaktanten 10 in die innere Abgasströmung 7 ausgebildet.

Als Reaktant 10 wird besonders bevorzugt Harnstoff, insbesondere in Form einer wässrigen Harnstofflösung, zugegeben. Harnstoff stellt einen Reduktionsmittelvorläufer des Reduktionsmittels Ammoniak dar, welches als Reduktionsmittel beispielsweise in der selektiven katalytischen Reduktion von Stickoxiden eingesetzt wird. Unter einem Reduktionsmittelvorläufer wird hier insbesondere ein Stoff verstanden, der zu dem Reduktionsmittel reagieren und/oder der das Reduktionsmittel abspalten kann. Vorliegend umfassen die Zugabemittel eine Düse 11, durch die der Reaktant 10 in die innere Abgasströmung 7 eingegeben wird. Die Zugabemittel 9 umfassen ferner entsprechende Versorgungsmittel wie beispielsweise einen Vorratsbehälter und/oder Fördermittel wie beispielsweise eine Pumpe.

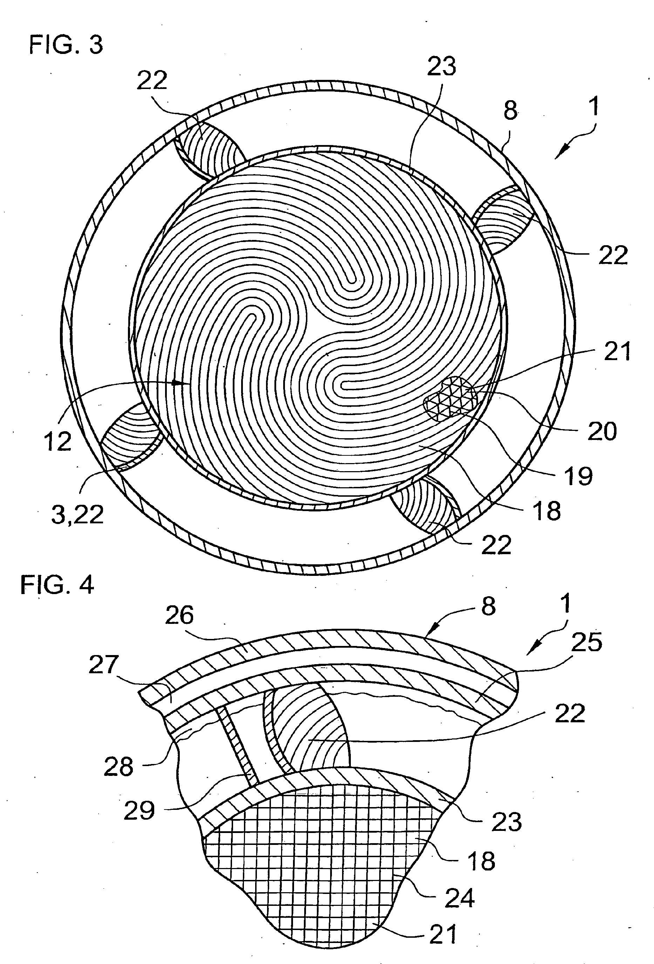

Die innere Abgasströmung 7 wird zusätzlich durch ein Laminarisierungsmittel 12 laminarisiert. Unter einer Laminarisierung wird hier insbesondere eine Reduktion der Reynoldszahl der Strömung verstanden. Das Laminarisierungsmittel 12 umfasst einen Wabenkörper, wie im Zusammenhang insbesondere mit den Figuren 3 und 4 näher erläutert wird. Durch die Laminarisierung der inneren Abgasströmung 7 wird die Wahrscheinlichkeit, dass es zu einem Auftreffen des Reaktanten 10 auf die innere Oberfläche des ersten Mantelrohrs 8 kommt, weiter verringert. Sofern ein Reaktantentropfen auf das erste Mantelrohr 8 auftreffen würde, so könnten dann, wenn die Temperatur des ersten Mantelrohres 8 unterhalb einer kritischen Temperatur liegt, unerwünschte Nebenprodukte aus dem Reaktanten 10 gebildet werden. Insbesondere dann, wenn Harnstoff als Reaktant 10 eingesetzt wird, kann es beim Auftreffen des Harnstoffs auf das erste Mantelrohr 8 zur Bildung von unerwünschten Nebenprodukten wie beispielsweise Biuret kommen. Biuret ist ein zähflüssiger Stoff, welcher sich üblicherweise nur unter extremen Reaktionsbedingungen wie beispielsweise einem sehr hohen Druck und einer hohen Temperatur wieder entfernen lässt und welcher eine solche Konsistenz hat, dass ein Verkleben des Mantelrohres und langfristig auch der im Abgassystem ausgebildeten Wabenkörper erfolgen könnte.

In Strömungsrichtung 2 stromabwärts der Zugabemittel 9 ist ein konusförmiger Wabenkörper 13 ausgebildet, welcher eine Erweiterung des für das Abgas durchströmbaren Querschnitts vom Eingangsquerschnitt 14 zum Ausgangsquerschnitt 15 bewirkt. Der konusförmige Wabenkörper 13 weist Kanäle auf, deren Querschnitt sich ebenfalls entsprechend erweitert. Bevorzugt weisen die Wände der Kanäle Durchbrechungen und Leitschaufeln auf, die einen Stofftransport quer zur Strömungsrichtung 2 ermöglichen. So kommt es zu einer Durchmischung der äußeren 6 und der inneren Abgasströmung 7.

Der konusförmige Wabenkörper 13 weist eine katalytisch aktive Beschichtung auf, die eine Hydrolyse des Harnstoffs katalysiert. Dadurch kommt es zu einer Umsetzung des Harnstoffs zu Ammoniak. Durch die Eignung, eine gewisse Querströmung zur Strömungsrichtung 2 zuzulassen, bewirkt der konusförmige Wabenkörper 13 eine gleichmäßige Verteilung des dann entstehenden Reduktionsmittels Harnstoff über den gesamten Querschnitt der Abgasströmung. Stromabwärts des konusförmigen Wabenkörpers 13 ist ein Reduktionskatalysator 16 ausgebildet. Dieser Reduktionskatalysator 16 umfasst einen Wabenkörper mit einer katalytisch aktiven Beschichtung, die eine selektive katalytische Reduktion von Stickoxiden katalysiert. Da der Reduktionskatalysator 16 von einer Abgasströmung beströmt wird, in der das Reduktionsmittel gleichmäßig verteilt ist, kommt es zu einer effektiven Umsetzung der Stickoxide im Reduktionskatalysator 16.

In Strömungsrichtung 2 stromabwärts des Reduktionskatalysators 16 ist ein Stickoxidkonzentrationssensor 17 ausgebildet, mit dem die Stickoxidkonzentration des den Reduktionskatalysator 16 verlassenden Abgases gemessen werden kann. Anhand der Messwerte des Stickoxidkonzentrationssensors 17 kann die Menge des zuzugebenen Reaktanten gesteuert und/oder geregelt werden, so dass eine möglichst vollständige Umsetzung der im Abgas vorhandenen Stickoxide (NOₓ) erfolgt.

Fig. 2 zeigt schematisch einen Ausschnitt einer erfindungsgemäßen Vorrichtung 1. Diese umfasst das Laminarisierungsmittel 12, sowie als Mittel 3 zum Aufprägen eines Dralls den gewundenen Kanal 4, welcher durch die gewundene Wand 5 begrenzt ist. Der äußeren Abgasströmung 6, welche durch den gewundenen Kanal 4 strömt, wird ein Drall aufgeprägt. Das Laminarisierungsmittel 12 bewirkt eine Laminarisierung der inneren Abgasströmung 7. Nach Verlassen des Laminarisierungsmittels 12 bzw. des gewundenen Kanals 4 erfolgt die Zugabe des Reaktanten 10 zu der inneren Abgasströmung 7, für die die mit dem Drall versehene äußere Abgasströmung 6 als eine Art Isolierung dient, die verhindert dass der Reaktant 10 mit dem ersten Mantelrohr 8 in Kontakt kommt.

Fig. 3 zeigt schematisch ein zweites Ausführungsbeispiel einer erfindungsgemäßen Vorrichtung 1 im Querschnitt. Diese Vorrichtung 1 umfasst im vorliegenden Querschnitt ein Laminarisierungsmittel 12, welches als Wabenkörper 18 ausgeführt ist. Der Wabenkörper 18 im vorliegenden zweiten Ausführungsbeispiel ist aus zumindest teilweise gewellten Lagen 19 und im wesentlichen glatten Lagen 20 ausgebildet. Die Lagen 19, 20 sind aus metallischem Werkstoff ausgebildet, insbesondere in Form von Blechfolien. Die Lagen 19, 20 sind so verformt, dass Kanäle 21 zwischen den zumindest teilweise gewellten Lagen 19 und den im wesentlichen glatten Lagen 20 gebildet werden. Im vorliegenden Ausführungsbeispiel wurden hierzu eine Mehrzahl von Lagen 19, 20 abwechselnd gestapelt und drei solcher Stapel miteinander verschlungen. Es ist auch möglich, nur zwei oder auch nur einen solchen Stapel zu verschlingen, zudem können auch entsprechende Lagen 19, 20 spiralförmig aufgewickelt werden.

Im vorliegenden zweiten Ausführungsbeispiel sind die Mittel 3 zum Aufprägen eines Dralls in Form von Leitschaufeln 22 ausgebildet, die radial außerhalb des Wabenkörpers 18 gebildet sind. Die Leitschaufeln 22 sind so ausgebildet, dass sie auf die äußere Abgasströmung 6 einen Drall aufprägen. Insbesondere können die Leitschaufeln 22 und/oder die gewundenen Wände 5 des gewundenen Kanals 4 elastisch ausgebildet sein. Bevorzugt sind diese Elemente 4, 22 so ausgebildet, dass sie ihre Krümmung bzw. ihre Auslenkung in Abhängigkeit einer Änderung mindestens einer der folgenden Größen verändern: der Abgastemperatur, dem Abgasmassenstrom und dem Abgasdruck. Dies kann beispielsweise dadurch erfolgen, dass die gewundene Wand 5 und/oder die Leitschaufeln 22 aus einem Bimetall gebildet werden oder aus einem elastischen Metall. Hierdurch kann der aufgeprägte Drall an die Bedingungen der Abgasströmung angepasst werden.

Der Wabenkörper 18 ist insbesondere so ausgebildet, dass er zu einer Verminderung der Reynoldszahl des Abgasstroms führt. Hierzu sind die Kanäle 21 bevorzugt barrierefrei ausgebildet. Das heißt dass die Oberflächen der im wesentlichen glatten Lage 20 und der zumindest teilweise gewellten Lage 19 insbesondere keine Mikrostrukturen, Leitschaufeln und/oder Durchbrechungen aufweisen und bevorzugt auch keine katalytisch aktive Beschichtung umfassen, so dass eine Bildung einer Turbulenz beim Durchströmen der Kanäle 21 möglichst vermieden wird.

Im vorliegenden Ausführungsbeispiel weist der Wabenkörper 18 ein zweites Mantelrohr 23 auf, welches den Wabenkörper 18 nach außen begrenzt. Die Leitschaufeln 22 bilden gleichzeitig Mittel zur Verschiebung der Resonanzfrequenz des zweiten Mantelrohres 23, d.h. über die Leitschaufeln 22 ist das zweite Mantelrohr 23 am ersten Mantelrohr 8 befestigt. So wird in vorteilhafter Weise eine Schädigung des Wabenkörpers 18 bei Erreichen einer Resonanzfrequenz des zweiten Mantelrohres 23 verhindert. Die Zugabemittel 9 liegen bei diesem Ausführungsbeispiel nicht in diesem Querschnitt, sondern in Strömungsrichtung 2 hinter dem Wabenkörper 18. Das zweite Mantelrohr 23 bewirkt beim Durchströmen mit Abgas die Aufteilung des Abgasstroms in die inneren Abgasströmung 7 und die äußere Abgasströmung 6.

Fig. 4 zeigt schematisch einen Ausschnitt eines Querschnitts eines dritten Ausführungsbeispiels einer erfindungsgemäßen Vorrichtung 1. Diese umfasst statt einem metallischen Wabenkörper einen keramischen Wabenkörper 18. Dieser weist Wände 24 auf, die Kanäle 21 begrenzen. Bevorzugt kann ein solcher keramischer Wabenkörper 18 extrudiert werden. Auch in diesem Ausführungsbeispiel weist der Wabenkörper 18 ein zweites Mantelrohr 23, sowie Leitschaufeln 22 zum Aufprägen eines Dralls auf eine äußere Abgasströmung 6 auf. Im dritten Ausführungsbeispiel ist das erste Mantelrohr 8 als doppeltes Mantelrohr mit einem inneren ersten Mantelrohr 25 und einem äußeren ersten Mantelrohr 26 ausgebildet. Die beiden ersten Mantelohre 25, 26 sind durch einen Spalt 27 voneinander getrennt. Dieser Spalt 27 wirkt als eine Art Luftspaltisolierung, welcher ein schnelles Abkühlen des inneren ersten Mantelrohres 25 verhindert. Bevorzugt ist das innere erste Mantelrohr 25 aus einem Material ausgebildet, welches sich schnell aufheizt, so dass es selbst dann, wenn Reaktant 10 durch den äußeren Gasstrom 6 treten kann, nicht zur Bildung von unerwünschten Nebenprodukten wie insbesondere Biuret kommen kann. Um die Wahrscheinlichkeit einer Bildung von unerwünschten Nebenprodukten weiter zu verringern, ist im dritten Ausführungsbeispiel im Inneren des inneren ersten Mantelrohres 25 eine katalytisch aktive Beschichtung 28 ausgebildet, die insbesondere als Hydrolysekatalysatorbeschichtung für Harnstoff ausgebildet ist. Hierdurch kann es in vorteilhafter Weise direkt zu einer Umsetzung des Reaktanten 10 kommen, so dass auch hierdurch die Wahrscheinlichkeit, dass sich unerwünschte Nebenprodukte am Mantelrohr 8, 25 bilden, weiter gesenkt wird. Das dritte Ausführungsbeispiel weist ferner zusätzliche Stützmittel 29 auf, die das zweite Mantelrohr am inneren ersten Mantelrohr 25 abstützen.

Das erfindungsgemäße Verfahren sowie die erfindungsgemäße Vorrichtung 1 erlauben es in vorteilhafter Weise, einen Reaktanten 10, insbesondere einen Reduktionsmittelvorläufer und/oder ein Reduktionsmittel, bevorzugt Harnstoff, insbesondere in wässriger Lösung in das Abgassystem einer Verbrennungskraftmaschine einzubringen, ohne dass es durch Kontakt des Reaktanten 10 mit dem üblicherweise vergleichsweise kühlen äußeren Mantelrohr 8, 25 der Vorrichtung 1 zur Bildung von unerwünschten Nebenprodukten wie beispielsweise Biuret kommt.

### Bezugszeichenliste

- 1: Vorrichtung zur Zugabe eines Reaktanten
- 2: Strömungsrichtung
- 3: Mittel zum Aufprägen eines Dralls
- 4: gewundener Kanal
- 5: gewundene Wand
- 6: äußere Abgasströmung
- 7: innere Abgasströmung
- 8: erstes Mantelrohr
- 9: Zugabemittel
- 10: Reaktant
- 11: Düse
- 12: Laminarisierungsmittel
- 13: konusförmiger Wabenkörper
- 14: Eingangsquerschnitt
- 15: Ausgangsquerschnitt
- 16: Reduktionskatalysator
- 17: Stickoxidkonzentrationssensor
- 18: Wabenkörper
- 19: zumindest teilweise gewellte Lage
- 20: im wesentlichen glatte Lage
- 21: Kanal
- 22: Leitschaufel
- 23: zweites Mantelrohr
- 24: Wand
- 25: inneres erstes Mantelrohr
- 26: äußeres erstes Mantelrohr
- 27: Spalt
- 28: katalytisch aktive Beschichtung
- 29: Stützmittel

## Patentansprüche

1. Verfahren zur Zugabe eines Reaktanten (10) zu einem Abgas einer Verbrennungskraftmaschine, bei dem ein Abgasstrom in eine innere Abgasströmung (7) und eine die innere Abgasströmung (7) radial umgebende äußere Abgasströmung (6) aufgeteilt wird, **dadurch gekennzeichnet, dass** der äußeren Abgasstömung (6) ein Drall aufgeprägt wird und dann der Reaktant (10) der inneren Abgasströmung (7) zugegeben wird.

2. Verfahren nach Anspruch 1, bei dem die innere Abgasströmung (7) laminarisiert wird.

3. Verfahren nach einem der vorhergehenden Ansprüche, bei dem der Reaktant (10) mindestens einen der folgenden Stoffe umfasst:
4.1) ein Reduktionsmittel ,
4.2) einen Reduktionsmittelvorläufer und
4.3) ein Oxidationsmittel.

4. Vorrichtung (1) zur Zugabe eines Reaktanten (10) zu einem Abgas einer Verbrennungskraftmaschine, wobei das Abgas in einer Strömungsrichtung (2) strömt und Mittel (3) zum Aufprägen eines Dralls auf eine äußere Abgasströmung (6), die eine innere Abgasströmung (7) radial umgibt, ausgebildet sind, wobei in Strömungsrichtung (2) hinter den Mitteln (3) zum Aufprägen eines Dralls Zugabemittel (9) zur Zugabe des Reaktanten (10) in die innere Abgasströmung (7) ausgebildet sind, **dadurch gekennzeichnet, dass** stromaufwärts der Zugabemittel (9) Laminarisierungsmittel (12) zum Laminarisieren der inneren Abgasströmung (7) ausgebildet sind.

5. Vorrichtung (1) nach Anspruch 4, bei dem die Mittel (3) zum Aufprägen eines Dralls mindestens eine Leitschaufel (22) umfassen.

6. Vorrichtung (1) nach Anspruch 5, bei der die mindestens eine Leitschaufel (22) aus einem Bimetall gebildet ist, so dass mindestens eine der folgenden Größen
a) eine Auslenkung der Leitschaufel (22) und
b) eine Krümmung der Leitschaufel (22)
in Abhängigkeit einer Änderung mindestens einer der folgenden Größen veränderbar ist:
9.1) der Abgastemperatur,
9.2) dem Abgasmassenstrom und
9.3) dem Abgasdruck.

7. Vorrichtung (1) nach einem der Ansprüche 4 bis 6, bei der die Mittel (3) zum Aufprägen eines Dralls mindestens einen gewundenen Kanal (4) umfassen.

8. Vorrichtung (1) nach Anspruch 4, bei der die Mittel (3) zum Aufprägen eines Dralls radial außerhalb der Laminierurigsmittel (12) ausgebildet sind.

9. Vorrichtung (1) nach einem der Ansprüche 4 bis 8, bei der der Reaktant (10) mindestens einen der folgenden Stoffe umfasst:
25.1) ein Reduktionsmittel und
25.2) einen Reduktionsmittelvorläufer.

## Claims

1. Method for feeding a reactant (10) to an exhaust gas of a combustion engine, wherein an exhaust gas stream is divided in an inner exhaust gas stream (7) and an outer exhaust gas stream (6) radially surrounding the inner exhaust gas stream (7), **characterized in that** a spin is imprinted on the outer exhaust gas stream (6) and then the reactant (10) is fed to the inner exhaust gas stream (7).

2. Method according to claim 1, wherein the inner exhaust gas stream (7) is laminarized.

3. Method according to one of the preceding claims, wherein the reactant (10) comprises at least on of the following substances:
4.1) a reducing agent,
4.2) a reducing agent precursor,
4.3) an oxidizing agent.

4. Apparatus (1) for feeding a reactant (10) to an exhaust gas of a combustion engine, wherein the exhaust gas flows in a flow direction (2) and means (3) for imprinting a spin on an outer exhaust gas stream (6), which radially surrounds an inner exhaust gas stream (7), are provided, wherein feeding means (9) for feeding the reactant (10) in the inner exhaust gas stream (7) are provided in the flow direction (2) behind the means (3) for imprinting a spin, **characterized in that** laminarisators (12) for laminarizing the inner exhaust gas stream (7) are provided upstream of the feeding means (9).

5. Apparatus (1) according to claim 4, wherein the means (3) for imprinting a spin comprise at least one guide blade (22).

6. Apparatus (1) according to claim 5, wherein the at least one guide blade (22) consists of a bimetal, such that at least one of the following parameters
a) a deflection of the guide blade (22) and
b) a bend of the guide blade (22)
is changeable dependent on one of the following parameters:
9.1) the exhaust gas temperature,
9.2) the exhaust gas mass flow and
9.3) the exhaust gas pressure.

7. Apparatus (1) according to one of claims 4 to 6, wherein the means (3) for imprinting a spin comprise at least one winded channel (4).

8. Apparatus (1) according to claim 4, wherein the means (3) for imprinting a spin are provided radially outside of the laminarisators (12).

9. Apparatus (1) according to one of claims 4 to 8, wherein the reactant (10) comprises at least one of the following substances:
25.1) a reducing agent and
25.2) a reducing agent precursor.

## Revendications

1. Procédé pour ajouter un réactif (10) à un gaz d'échappement d'un moteur à combustion interne, dans le cas duquel un courant de gaz d'échappement est divisé en un flux de gaz d'échappement intérieur (7) et un flux de gaz d'échappement extérieur (6) entourant radialement le flux de gaz d'échappement intérieur (7), **caractérisé en ce que** le flux de gaz d'échappement extérieur (6) est imprégné d'une torsion et qu'ensuite le réactif (10) est ajouté au flux de gaz d'échappement intérieur (7).

2. Procédé selon la revendication 1, dans le cas duquel le flux de gaz d'échappement intérieur (7) est laminé.

3. Procédé selon l'une des revendications précédentes, dans le cas duquel le réactif (10) comprend au moins une des substances suivantes :
4.1) un agent de réduction,
4.2) un précurseur d'agent de réduction et
4.3) un agent d'oxydation.

4. Dispositif (1), destiné à ajouter un réactif (10) à un gaz d'échappement d'une machine à combustion interne, le gaz d'échappement s'écoulant dans un sens d'écoulement (2) et des moyens (3) sont réalisés pour imprégner avec une torsion un flux de gaz d'échappement extérieur (6), qui entoure radialement un flux de gaz d'échappement intérieur (7), dans le sens d'écoulement (2) derrière les moyens (3) pour imprégner avec une torsion des moyens de fournissage (9) pour ajouter le réactif (10) dans le flux de gaz d'échappement intérieur (7) étant prévus, **caractérisé en ce qu'**en amont des moyens de fournissage (9) des moyens de laminage (12) pour laminer le flux de gaz d'échappement intérieur (7) étant réalisés.

5. Dispositif (1) selon la revendication 4, dans le cas duquel les moyens (3) pour imprégner une torsion comprennent au moins une aube directrice (22).

6. Dispositif (1) selon la revendication 5, dans le cas duquel au moins une aube directrice (22) est formée d'un bimétal, de sorte qu'au moins une des données suivantes
a) une déviation de l'aube directrice (22) et
b) une courbure de l'aube directrice (22)
est modifiable en fonction d'une modification d'au moins une des données suivantes :
9.1) de la température du gaz d'échappement,
9.2) de l'écoulement massique de gaz d'échappement et
9.3) de la pression du gaz d'échappement.

7. Dispositif (1) selon l'une des revendications 4 à 6, dans le cas duquel les moyens (3) pour imprégner une torsion comprennent au moins un canal sinueux (4).

8. Dispositif (1) selon la revendication 4, dans le cas duquel les moyens (3) pour imprégner une torsion sont réalisés radialement à l'extérieur des moyens de stratification (12).

9. Dispositif (1) selon l'une des revendications 4 à 8, dans le cas duquel le réactif (10) comprend au moins une des substances suivantes :
25.1) un agent de réduction et
25.2) un précurseur d'agent de réduction.
